# EUROPEAN PATENT SPECIFICATION

(11) **EP 0 521 210 B1**
(45) Date of publication and mention of the grant of the patent: **22.03.2000**
(21) Application number: 91306144.6
(22) Date of filing: 05.07.1991
(51) Int. Cl.: G06T 15/10

(54) **Graphics clipping**
Graphische Abschneidung
Découpage graphique

(43) Date of publication of application: 07.01.1993
(73) Proprietor: International Business Machines Corporation, Armonk, N.Y. 10504 (US)
(72) Inventor: Herrod, John Andrew, Eastleigh, Hampshire S05 2BU (GB)
(74) Representative: Bailey, Geoffrey Alan

(56) References cited:
- EP-A- 0 163 852
- EP-A- 0 255 544
- GB-A- 2 219 470

## Description

This invention relates to the field of graphics display with data processing systems. More particularly, this invention relates to graphics clipping.

It is known to provide graphics displays comprising a number of overlapping areas, such as the rectangular windows in the Operating System/2 or Graphical Data Display Manager programs produced by International Business Machines Corporation. Each window contains graphics objects and as the user varies the size of the window the system determines what portion of the objects are inside the window and displays only that portion. This process is know as clipping. The copending European Patent Publication No. 521209 entitled 'Graphics Processing Method and Apparatus' describes a number of clipping techniques.

In such displays each window can be thought to be assigned a priority, with windows of higher priority overlying windows of lower priority where they overlap. One known way of dealing with the overlapping windows is to start from tile window of lowest priority, drab this and then proceed to draw the window with the next highest priority until all the windows have been drawn. By proceeding in such a way those portions of the lower priority windows that ire overlapped by higher priority windows are first drawn and then overlaid.

Such a technique is disadvantageously slow and distracting for the user. Time is spent needlessly drawing portions of low priority windows that will subsequently he overlaid by tie higher priority windows. Updates to an overlapped window require all the overlapping windows to be redrawn. In addition, such a screen cannot he readily printed or plotted on a printer or plotter since it is not possible to wipe out overlapped parts as you can on a screen.

An alternative way of dealing with overlapping windows would be to provide a clipper which assigns ownership of picture elements of a display to a particular window and only allows the window owning a given picture element to write to it. Such a technique requires a disadvantageous processing and data storage overhead resulting from the need to deal with each picture element separately. The relative inefficiency of this technique is particularly apparent when graphics orders (i.e. instructions defining graphics objects such as lines, areas, circles etc.) are being processed.

EP-A-163852 (IBM) discloses a method of determining the coincidence of a subject area and a clip area in a graphic display system, comprising creating three parts list, one for parts of the subject area that are outside the clip area, a second for parts of the clip area that are inside the subject area and a third for overlapping lines. The parts of the subject which lie outside the clip area are defined by examining the parts lists. The output can then be used to control a pen plotter, in which different colours are used so that underlying areas do not have to be inked over with overlay colours.

It will be seen that there exists a need for way of dealing with overlapping windows (areas of overlapping graphics - not necessarily rectangular or variable in size) which does not rely on first drawing and then overlaying the lower priority windows and yet does not introduce the disadvantages associated with the alternative.

Viewed from a first aspect the invention provides a method according to claim 1 of displaying overlapping windows containing graphics objects defined by graphics orders comprising the steps of processing said graphics orders to generate modified graphics orders defining those portions of said graphics objects not overlapped, and driving a graphics display device with said modified graphics orders to display said portions of said graphics objects not overlapped.

The invention provides a technique by which the portion of a window which is not overlaid, and therefore is to be displayed, may be determined so avoiding needlessly displaying and then overlying of hidden portions. In addition this function is achieved without having to use a clipper based on individual picture element ownership with its accompanying disadvantages.

The system will often already contain clipping mechanisms for determining what portion of a body of material lies within the boundary of the window within which that body of material is to be displayed. The invention adapts these existing clipping mechanisms to process graphics orders to determine that portion lying outside of windows of higher priority. Accordingly, existing fast and proven clipping mechanisms, which are normally used to determine what lies within a boundary, may be adapted to determine what lies outside a given set of boundaries.

In preferred embodiments of the invention a list of windows capable of overlying said graphics objects is read, and said step of processing said graphics orders generate modified graphics orders is performed for each overlying window read from said list. This preferred way of dealing with the windows is both simple and efficient. It is also preferred that a priority value is associated with each window to indicate which windows are capable of overlying which other windows.

If said graphics includes a line, then preferably said step of processing said graphics orders to generate modified graphics orders includes detecting points at which said line crosses the border of a window and generating two, one or no lines representing the portions of said line not overlapped. The mechanism necessary to perform the detection of the crossing points is already built in to many windowing systems for use in clipping to the inside of windows.

If said graphics includes an area defined by boundary lines, then preferably said step of processing said graphics orders to generate modified graphics orders includes detecting those portions of boundary lines defining an area not overlapped and generating graphics orders defining closure lines along said overlying window border between points at which said boundary lines enter an overlying window and points at which said boundary lines exits said over lying window. The mechanism for determining in which direction to draw the closure lines can be adapted from the mechanism described in the copending application referred to earlier by joining entry points to exit points for clipping to the outside of a window rather than exit points to entry point for clipping to the inside of a window.

If said graphics includes image graphics comprising an array of picture element values, then preferably said step of processing said graphics orders to generate modified graphics orders includes turning off those picture elements overlaid. This procedure will work when the display device is operating in a mode in which pels which are turned off don't have any effect on material over which they are drawn, i.e. a background mix mode of leave alone.

In other modes it may be desired that the image be drawn with a specified background colour. In such cases, when said image graphics is being displayed with a specified background, said step processing said graphics orders to generate modified graphics orders includes generating graphics orders defining a background area, and clipping and displaying said background area as a graphics object prior to processing and displaying said image graphics. In this way the system can deal with background colouring using the existing mechanisms for other graphics objects. In particular, the background area can be treated as an graphics area to be displayed using efficient area fill methods.

Finally, if said graphics includes symbol set characters, then preferably said step processing said graphics orders to generate modified graphics orders includes detecting and rejecting characters that are completely overlaid, detecting and drawing characters that are completely uncovered, and detecting characters that are partially overlaid, expanding such partially overlaid characters into lines or areas defined by boundary lines or image graphics and processing said expanded characters as if they were graphics objects defined by boundary lines or image graphics or lines. In this way text characters may be dealt with by using the mechanisms that already exist for processing other types of graphics, thereby increasing efficiency.

Viewed from a second aspect the invention provides a graphics display apparatus for displaying overlapping windows containing graphics objects defined by graphics orders comprising clipping logic having means for processing said graphics orders to generate modified graphics orders defining those portions of said graphics objects not overlapped, and means for driving a graphics display device with said modified graphics orders to display said portions of said graphics objects not overlapped.

Claim 7 defines a corresponding graphics display apparatus and claim 9 a corresponding graphics display system control program.

An embodiment of the invention will now be described, by way of example only, with reference to the accompanying drawings in which:
Figure 1 illustrates an overlapping windows display of the type with which the invention may be used.
Figure 2 illustrates a known technique for producing an overlapping windows display.
Figure 3 illustrates the operation of the invention in general terms.
Figure 4 illustrates the operation of the invention with graphics comprising lines.
Figure 5 illustrates the operation of the invention with graphics comprising areas defined by boundary lines.
Figure 6 illustrates the operation of the invention with graphics comprising image formed of an array of picture elements.
Figure 7 illustrates the operation of the invention with graphics comprising text.
Figure 8 illustrates a general purpose computer for implementing the invention.

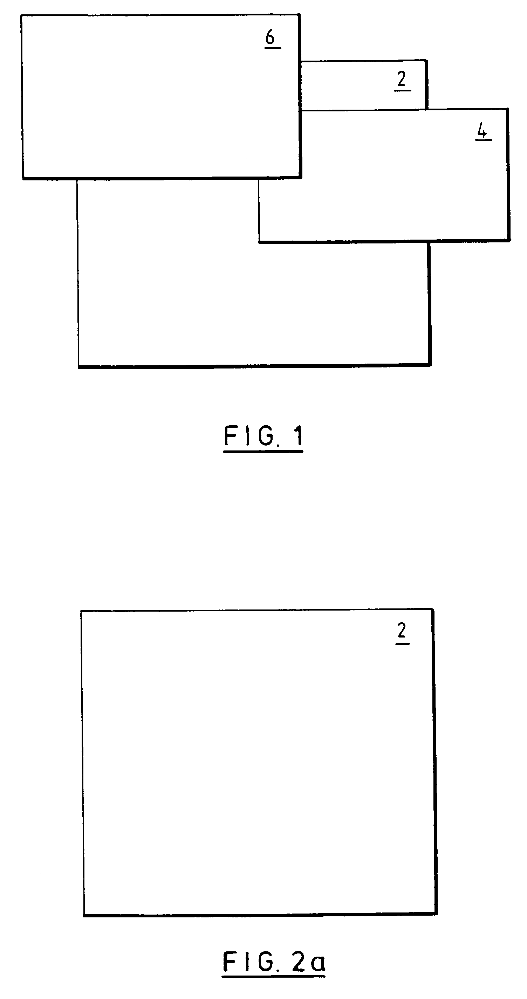

Figure 1 illustrates a windowing display of the type with which the present invention is concerned. Window 2 is overlapped by windows 4 and 6. Window 2 has the lowest priority. Window 4 overlaps window 2 and is itself overlapped by window 6. Window 4 has a priority higher than window 2 and lower than window 6. Window 6 overlaps both window 2 and window 4. Window 6 has the highest priority. Window 6 displays material which obscures material within both window 2 and window 4.

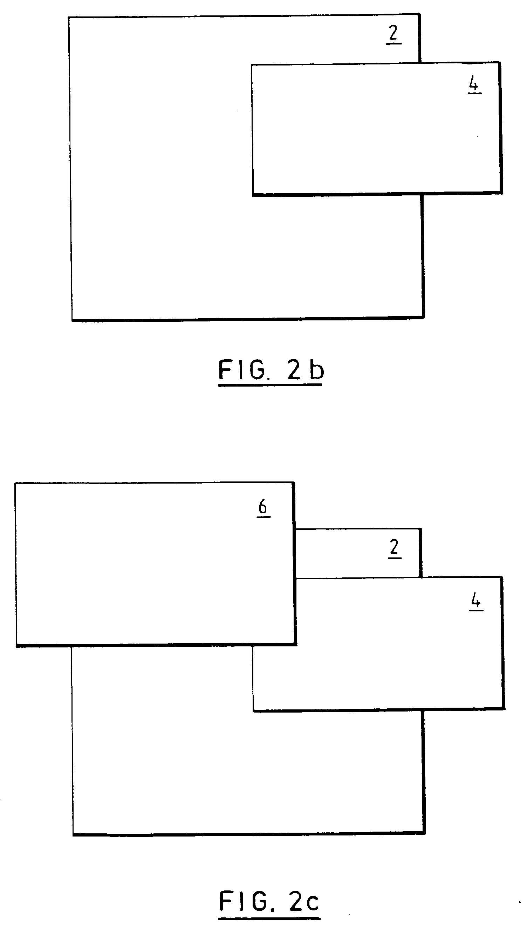

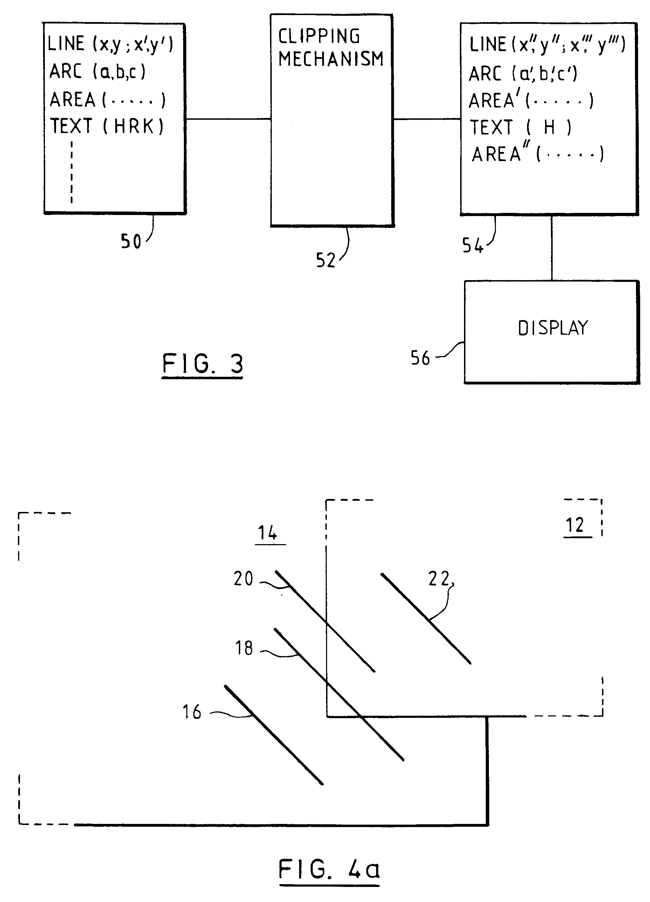

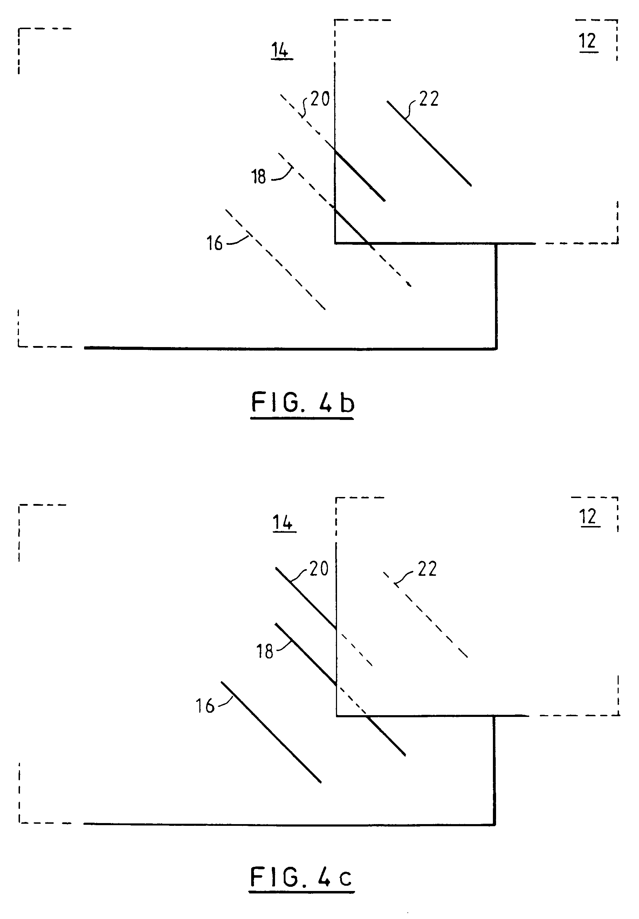

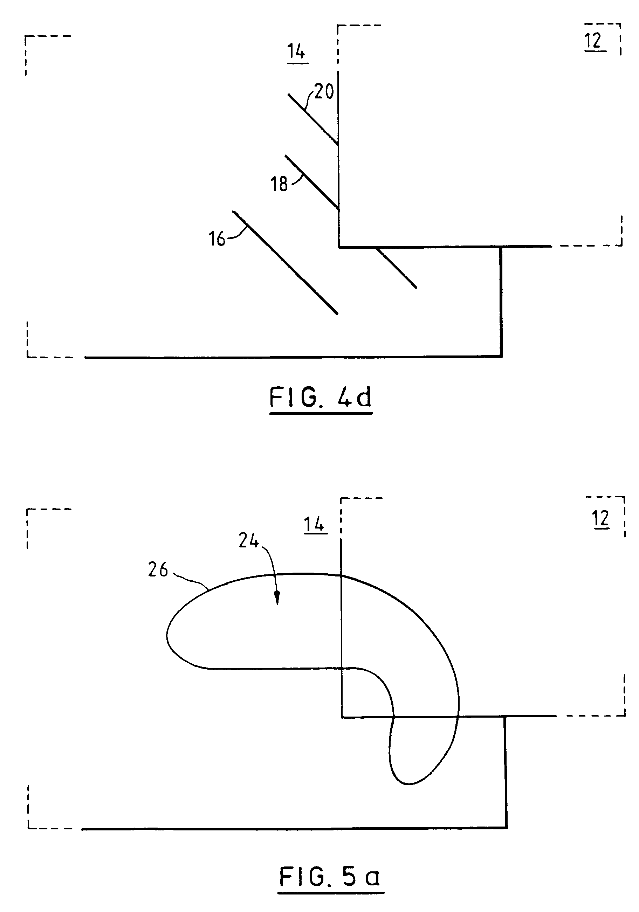

Figure 2 illustrates one technique for producing a windows display as illustrated in Figure 1. Figure 2a illustrates the first step in this process in which the window with the lowest priority, namely window 2, is drawn. Figure 2b illustrates the next step in this process in which the window with the next highest priority, namely window 4, is drawn. Window 4 overlaps window 2, and where this overlap occurs the material in Figure 4 is drawn over the material in window 2 thereby rendering the previously displayed material no longer visible. Figure 2c illustrates the final step in the process in which the window with the highest priority, namely window 6, is drawn. Window 6 overlaps both window 2 and window 4. The material in window 6 is drawn on top of the underlying windows and renders the overlapped material no longer visible.

Each window is in turn drawn in full starting from the lowest priority window and working to the highest priority window. Material in the lower priority windows is drawn and then obscured by overlying windows. This is both distracting to the user and inefficient. Time is spent needlessly drawing material which will subsequently be overlapped and obscured.

Figure 3 illustrates operation of the invention in general terms. The list of graphics orders 50 defining the unclipped graphics objects in a window are processed using a clipping mechanism 52. The clipping mechanism 52 adapts the existing mechanisms for clipping to the inside of a window to clip to the outside of overlying windows. A list of modified graphics orders 54 is generated by the clipping mechanism 52. The clipping mechanism refers to a list of windows with associated priority values to determine with respect to which potential overlapping windows a particular set of graphics orders should be clipped against. The list of modified graphics orders 54 represents those portions of the graphics objects which should be visible on the final screen. The list of modified graphics orders 54 is then used to drive the display 56. The manner in which the clipping mechanism 52 deals with several different types of graphics orders will be described below.

Figure 4 illustrates the operation of the invention when the graphics includes lines. Figure 4a shows two windows, namely window 12 and window 14. Window 12 has a higher priority than window 14 and accordingly material within window 14 may be overlaid and obscured by material within window 12 (this relationship between windows 12 and 14 is also used in describing the operation of the invention with other types of graphics object). Lines 16, 18, 20 and 22 are graphics to be displayed within window 14. Each of these lines has a different relationship with respect to window 12. Line 16 lies completely outside of window 12. Line 22 lies completely within window 12. Line 20 has one end within window 12 and one end outside of window 12. Line 18 has its middle portion within window 12.

The first stage in the process is to determine which portions of the various lines lie within window 12. This is illustrated in Figure 4b. A clipping technique such as those described in the book "Fundamentals of Interactive Computer Graphics" by J D Foley and A Van Dam published by Addison-Wesley Publishing Company may be used to determine that line 22 lies entirely within window 12, one end of line 20 lies within window 12, and the mid portion of line 18 lies within window 12. The clipping technique detects the points at which the lines cross the window border. Lines that lie either entirely inside or entirely outside the window will not have crossing points. Line 16 is determined to lie entirely outside of window 12. The next stage in the process is illustrated in Figure 4c. Each of the full lines is compared with the portion of that line determined to lie within window 12 and the difference is that portion lying outside window 12. The solid lines in figure 4c illustrate the portions determined to be outside window 12. Figure 4d illustrates the final step in which graphics orders representing these portions are produced.

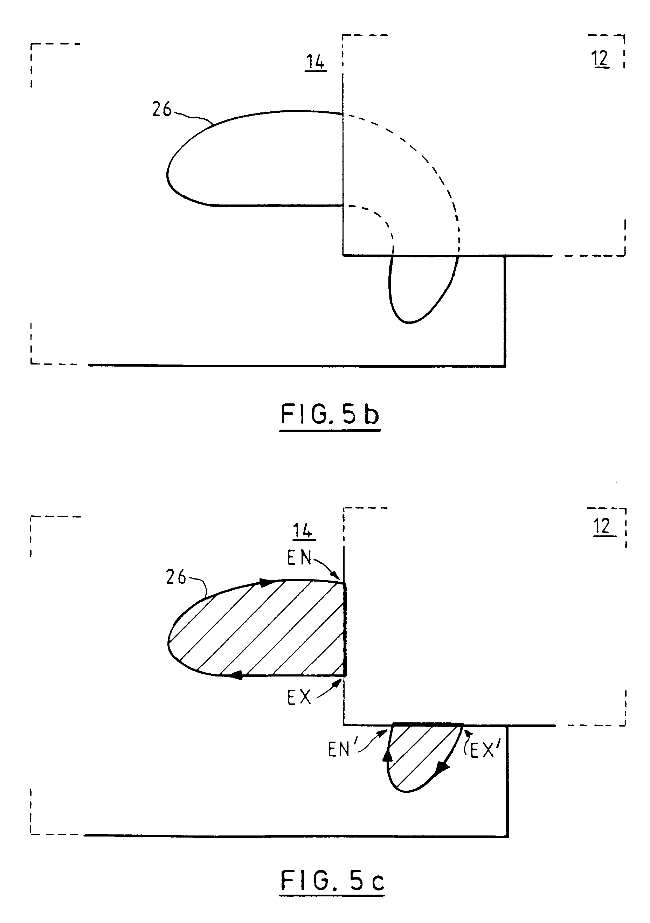

Figure 5 illustrates the operation of the invention when the graphics is an area defined by its border. Figure 5a shows an area 24 with a border 26 in relation to the windows described in connection with Figure 5. The clipping process described above is applied to the border 26 to give the border lines shown in Figure 5b corresponding to the portion of the border lying outside the window.

Closure lines must be drawn between the points at which the border 26 enters and leaves the window 12 to enable the filling algorithms to operate properly. The drawing of such closure lines is discussed in more detail in the copending European Patent Application mentioned in the introduction. As shown in Fig. 5d, the closure lines are drawn between entry points (EN) and exit points (EX). The closure lines are necessary to enable the area filling algorithms to operate correctly.

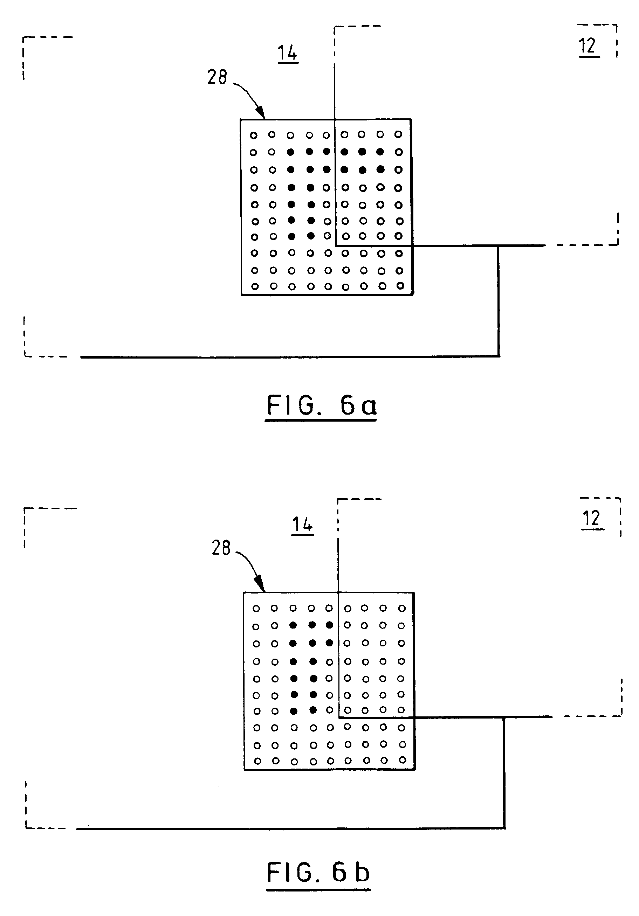

Figure 6 illustrates the operation of the invention when the graphics is image comprising an array of picture elements. Figure 6a illustrates such an area of image graphics, in the approximate shape of an inverted L, lying partially within window 12 and partially within window 14. The clipping mechanism reads the x and y coordinates corresponding to the edges of window 12 and the area of image 28. Responsive to these the clipping mechanism then run through the picture elements of the image 28 and turns off those lying within window 12. The result is illustrated in Figure 6b. If no background is specified then when a picture element which is turned off is drawn it has no effect upon what was previously shown at that point.

If the image is being drawn with a specified background then the clipping mechanism operates by treating the background as a graphics object in its own right which must also be clipped before being drawn (i.e. if the image is overlaid in its centre then both the background and the image must have the centre, clipped out of them). Once the clipped background is drawn then the image can be drawn on top as described above. The background can be treated in the same way as an area defined by its boundary and can be filled using an area filling algorithm. The clipping techniques previously described for areas are applied to the background area.

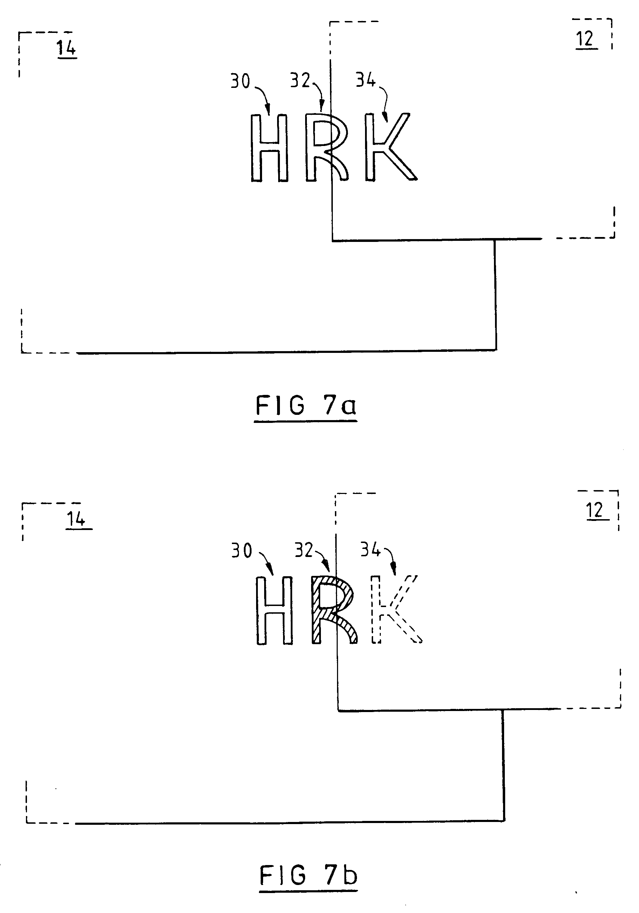

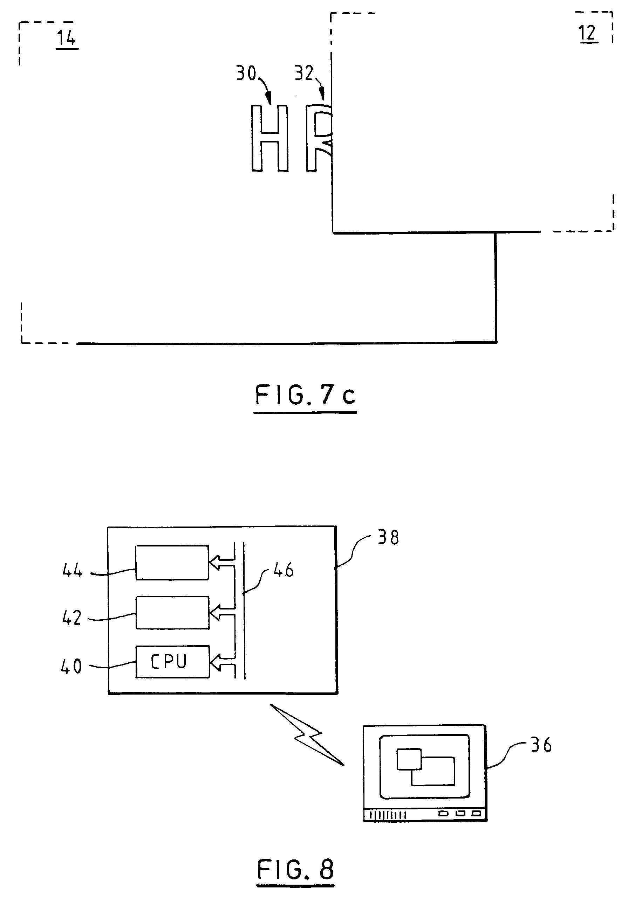

Figure 7 illustrates the operation of the invention when the graphics comprises symbol set characters, e.g. text. Text characters are specified by a person creating graphics material by indicating a font and the characters required. The system then uses the specified characters to access the required graphics orders (image, area defined by border, or lines) to display that character, from the font. This saves effort as the form of the character does not have to be specified by the user. Figure 7a illustrates three letters, 30, 32 and 34, each having a different relationship with respect to window 12. Letter 30 lies completely outside of window 12, letter 34 lies completely inside of window 12, and letter 32 overlaps the border between window 12 and window 14. Figure 7b illustrates the first step in the process whereby letter 34 is identified as lying entirely within window 12, letter 30 is identified as lying entirely outside of window 12, and letter 32 is identified as lying partially inside window 12. Letters 30 and 34 may be relatively easily dealt with. Letter 30 will be displayed whereas letter 34 will not be displayed.

Depending upon the type of font being employed, it may be possible to expand (switch from treating as a character only, and instead treat as a piece of graphics in its own right, i.e image, area defined by border, or lines) letter 32 as either image graphics or as an area/series of areas defined by its boundary or lines. Once the letter 32 has been expanded in this manner it will then be processed as either image graphics or an area defined by its boundaries or as lines in accordance with the techniques described in Figures 4, 5, or 6.

It will be appreciated by those skilled in the art that the technique of the present invention can he implemented as a computer program controlling a general purpose computer and graphical display system, or alternatively could be implemented as special purpose hardware (although in practice this later would be difficult and expensive).

Figure 8 illustrates a general purpose computing system for implementing the present invention. A host computer 38 is connected via communication links to one or more display terminals 36. The host computer 38 includes a CPU 40, programme storage 42 and data storage 44 all linked via a communication bus 46. The programme store 42 will hold a graphics program such as the Graphical Data Display Manager program produced by International Business Machines Corporation. Under the control of such a program the CPU 40 performs the necessary logical functions required to carry out the invention. Under the control of a first set of computer program instructions the CPU performs as logic for detecting material within overlying windows, under the control of subsequent computer program instructions the CPU 40 behaves as logic for comparing the graphics detected with that which is not overlaid and finally under the control of still further computer program instructions serve to drive the display terminal 36 to display the graphics determined to not be overlaid.

## Claims

1. A method of displaying on a display screen overlapping windows containing graphics objects defined by graphics orders, said method comprising the steps of:
assigning each window a priority value, with windows of a higher priority overlying windows with a lower priority where said windows overlap, generating a list of said windows with associated priority values to determine which of said overlapping windows is capable of overlying graphics objects in windows of lower priority,
for each overlapping window read from said list, processing said graphics orders to generate modified graphics orders defining those portions of said graphics objects not overlapped, and
driving a graphics display device with said modified graphics orders to display said portions of said graphics objects not overlapped.

2. A method of displaying overlapping windows as claimed in claim 1, wherein if said graphics includes a line, then said step of processing said graphics orders to generate modified graphics orders includes detecting points at which said line crosses the border of a window and generating two, one or no lines representing the portions of said line not overlapped.

3. A method of displaying overlapping windows as claimed in claim 1 or claim 2, wherein if said graphics includes an area defined by boundary lines, then said step of processing said graphics orders to generate modified graphics orders includes detecting those portions of boundary lines defining an area not overlapped and generating graphics orders defining closure lines along said overlying window border between points at which said boundary lines enter an overlying window and points at which said boundary lines exits said overlying window.

4. A method of displaying overlapping windows as claimed in any preceding claim, wherein if said graphics includes image graphics comprising an array of picture element values, then said step of processing said graphics orders to generate modified graphics orders includes turning off those picture elements overlaid.

5. A method of displaying overlapping windows as claimed in claim 4, wherein when said image graphics is being displayed with a specified background, said step processing said graphics orders to generate modified graphics orders includes generating graphics orders defining a background area, and clipping and displaying said background area as a graphics object prior to processing and displaying said image graphics.

6. A method of displaying overlapping windows as claimed in any preceding claim, wherein if said graphics includes symbol set characters, then said step processing said graphics orders to generate modified graphics orders includes detecting and rejecting characters that are completely overlaid, detecting and drawing characters that are completely uncovered, and detecting characters that are partially overlaid, expanding such partially overlaid characters into lines or areas defined by boundary lines or image graphics and processing said expanded characters as if they were graphics objects defined by boundary lines or image graphics or lines.

7. A graphics display apparatus for displaying overlapping windows containing graphics objects defined by graphics orders, said graphics display apparatus comprising:
means for assigning each window a priority value, with windows of a higher priority overlying windows with a lower priority where said windows overlap,
means for generating a list of said windows with associated priority values to determine which of said overlapping windows is capable of overlying graphics objects in windows of lower priority, clipping logic having means for processing said graphics orders to generate modified graphics orders defining those portions of said graphics objects not overlapped for each overlapping window read from said list, and
means for driving a graphics display device with said modified graphics orders to display said portions of said graphics objects not overlapped.

8. A graphics display apparatus as claimed in claim 7, wherein said clipping logic includes means for processing graphics orders comprising symbol set characters by detecting and rejecting characters that are completely overlaid, detecting and drawing characters that are completely uncovered, and detecting characters that are partially overlaid, expanding such partially overlaid characters into lines or areas defined by boundary lines or image graphics and processing said expanded characters as if they were graphics objects defined by boundary lines or image graphics or lines.

9. A graphics display system control program for a graphics display apparatus for displaying overlapping windows containing graphics objects defined by graphics orders, said graphics display system control program comprising:
computer program instructions for assigning, each window a priority value, with windows of a higher priority overlying windows with a lower priority where said windows overlap,
computer program instructions for generating a list of said windows with associated priority values to determine which of said overlapping windows is capable of overlying graphics objects in windows of lower priority,
clapping logic having means for processing said graphics orders to generate modified graphics orders defining those portions of said graphics objects not overlapped for each overlapping window read from said list, and
computer program instructions for driving a graphics display deuce with said modified graphics orders to display said portions of said graphics objects not overlapped.

## Patentansprüche

1. Verfahren zur Anzeige von einander überlappenden Fenstern auf einem Bildschirm, die Grafikobjekte enthalten, welche von Grafikbefehlen angegeben werden, wobei das Verfahren die folgenden Schritte umfasst:
Zuordnen eines Prioritätswerts zu jedem Fenster, wobei an den Stellen, an denen die Fenster einander überlappen, Fenster mit einer höheren Priorität Fenster mit einer niedrigeren Priorität überlagern,
Erzeugen einer Liste der Fenster mit zugeordneten Prioritätswerten, um festzustellen, welches der überlappenden Fenster Grafikobjekte in Fenstern mit einer niedrigeren Priorität überlagern kann,
Verarbeiten der Grafikbefehle für jedes überlappende Fenster, das aus der Liste gelesen wird, um geänderte Grafikbefehle zu erzeugen, die diejenigen Teile der Grafikobjekte angeben, die nicht überlappt werden, und
Ansteuern einer Grafikanzeigeeinheit mit den geänderten Grafikbefehlen, um die Teile der Grafikobjekte anzuzeigen, die nicht überlappt werden.

2. Verfahren zur Anzeige von einander überlappenden Fenstern nach Anspruch 1, wobei, wenn die Grafik eine Linie enthält, der Schritt der Verarbeitung der Grafikbefehle zur Erzeugung von geänderten Grafikbefehlen die Feststellung von Punkten, an denen die Linie die Begrenzung eines Fensters kreuzt, und die Erzeugung von zwei Linien, einer Linie oder keiner Linie, welche die nichtüberlappten Teile der Linie darstellen, beinhaltet.

3. Verfahren zur Anzeige von einander überlappenden Fenstern nach Anspruch 1 oder Anspruch 2, wobei, wenn die Grafik einen von Begrenzungslinien festgelegten Bereich enthält, der Schritt der Verarbeitung der Grafikbefehle zur Erzeugung von geänderten Grafikbefehlen die Feststellung von denjenigen Teilen der Begrenzungslinien, die einen nichtüberlappten Bereich festlegen, und die Erzeugung von Grafikbefehlen beinhaltet, die Beendigungslinien entlang der Begrenzung des Überlagerungsfensters zwischen Punkten festlegen, an denen die Begrenzungslinien in ein Überlagerungsfenster eintreten, und Punkten, an denen die Begrenzungslinien aus dem Überlagerungsfenster austreten.

4. Verfahren zur Anzeige von einander überlappenden Fenstern nach einem der vorhergehenden Ansprüche, wobei, wenn die Grafik Bildgrafiken enthält, die eine Matrix aus Bildelementwerten umfassen, der Schritt der Verarbeitung der Grafikbefehle zur Erzeugung von geänderten Grafikbefehlen die Ausschaltung derjenigen Bildelemente, die überlagert werden, beinhaltet.

5. Verfahren zur Anzeige von einander überlappenden Fenstern nach Anspruch 4, wobei, wenn die Bildgrafik mit einem angegebenen Hintergrund angezeigt wird, der Schritt der Verarbeitung der Grafikbefehle zur Erzeugung von geänderten Grafikbefehlen die Erzeugung von Grafikbefehlen, die einen Hintergrundbereich festlegen, und das Abschneiden und Anzeigen des Hintergrundbereichs als ein Grafikobjekt beinhaltet, bevor die Bildgrafik verarbeitet und angezeigt wird.

6. Verfahren zur Anzeige von einander überlappenden Fenstern nach einem der vorhergehenden Ansprüche, wobei, wenn die Grafik Zeichen eines Symbolsatzes enthält, der Schritt der Verarbeitung der Grafikbefehle zur Erzeugung von geänderten Grafikbefehlen die Feststellung und Zurückweisung von Zeichen, die vollständig überlagert werden, die Feststellung und das Zeichnen von Zeichen, die vollständig unbedeckt sind, und die Feststellung von Zeichen, die teilweise überlagert werden, beinhaltet, wobei solch teilweise überlagerte Zeichen zu Linien oder Bereichen erweitert werden, die von Begrenzungslinien oder Bildgrafiken festgelegt werden, und die erweiterten Zeichen verarbeitet werden, als ob es sich dabei um Grafikobjekte handeln würde, die von Begrenzungslinien oder Bildgrafiken oder Linien festgelegt werden.

7. Grafikanzeigevorrichtung zur Anzeige von einander überlappenden Fenstern, die Grafikobjekte enthalten, welche von Grafikbefehlen angegeben werden, wobei die Grafikanzeigevorrichtung Folgendes umfasst:
Mittel, die dazu dienen, jedem Fenster einen Prioritätswert zuzuordnen, wobei an den Stellen, an denen die Fenster einander überlappen, Fenster mit einer höheren Priorität Fenster mit einer niedrigeren Priorität überlagern,
Mittel, die dazu dienen, eine Liste der Fenster mit zugeordneten Prioritätswerten zu erzeugen, um festzustellen, welches der überlappenden Fenster Grafikobjekte in Fenstern mit einer niedrigeren Priorität überlagern kann,
Abschneidelogik, die über Mittel zur Verarbeitung der Grafikbefehle verfügt, um geänderte Grafikbefehle zu erzeugen, die für jedes überlappende Fenster, das aus der Liste gelesen wird, diejenigen Teile der Grafikobjekte angeben, die nicht überlappt werden, und
Mittel zur Ansteuerung einer Grafikanzeigeeinheit mit den geänderten Grafikbefehlen, um die Teile der Grafikobjekte anzuzeigen, die nicht überlappt werden.

8. Grafikanzeigevorrichtung nach Anspruch 7, wobei die Abschneidelogik Mittel enthält, um Grafikbefehle zu verarbeiten, die Zeichen eines Symbolsatzes umfassen, indem Zeichen, die vollständig überlagert werden, festgestellt und zurückgewiesen werden, Zeichen, die vollständig unbedeckt sind, festgestellt und gezeichnet werden, und Zeichen, die teilweise überlagert werden, festgestellt werden, wobei solch teilweise überlagerte Zeichen zu Linien oder Bereichen erweitert werden, die von Begrenzungslinien oder Bildgrafiken festgelegt werden, und die erweiterten Zeichen verarbeitet werden, als ob es sich dabei um Grafikobjekte handeln würde, die von Begrenzungslinien oder Bildgrafiken oder Linien festgelegt werden.

9. Grafikanzeigesystem-Steuerprogramm für eine Grafikanzeigevorrichtung, um einander überlappende Fenster anzuzeigen, die Grafikobjekte enthalten, welche von Grafikbefehlen angegeben werden, wobei das Grafikanzeigesystem-Steuerprogramm Folgendes umfasst:
Rechnerprogrammbefehle, um jedem Fenster einen Prioritätswert zuzuordnen, wobei an den Stellen, an denen die Fenster einander überlappen, Fenster mit einer höheren Priorität Fenster mit einer niedrigeren Priorität überlagern,
Rechnerprogrammbefehle, um eine Liste der Fenster mit zugeordneten Prioritätswerten zu erzeugen, um festzustellen, welches der überlappenden Fenster Grafikobjekte in Fenstern mit einer niedrigeren Priorität überlagern kann,
Abschneidelogik, die über Mittel zur Verarbeitung der Grafikbefehle verfügt, um geänderte Grafikbefehle zu erzeugen, die für jedes überlappende Fenster, das aus der Liste gelesen wird, diejenigen Teile der Grafikobjekte angeben, die nicht überlappt werden, und
Rechnerprogrammbefehle, um eine Grafikanzeigeeinheit mit den geänderten Grafikbefehlen anzusteuern, um die Teile der Grafikobjekte anzuzeigen, die nicht überlappt werden.

## Revendications

1. Méthode pour afficher une un écran des fenêtres chevauchantes contenant des objets graphiques définis par ordres graphiques, ladite méthode comprenant les phases qui consistent à :
assigner à chaque fenêtre une valeur de priorité, les fenêtres ayant une priorité plus élevée recouvrant les fenêtres qui ont un niveau de priorité plus faible, où les dites fenêtres se chevauchent,
générer une liste des dites fenêtres avec les valeurs de priorité qui leurs sont associées pour déterminer laquelle des dites fenêtres chevauchantes peut recouvrir des objets graphiques affichés dans des fenêtres de priorité plus faible,
pour chaque fenêtre chevauchante lue dans ladite liste, traiter les dits ordres graphiques pour générer des ordres graphiques modifiés définissant les portions des dits objets graphiques qui ne sont pas recouvertes, et
diriger un dispositif d'affichage graphique au moye des dits ordres graphiques modifiés pour afficher les dites parties des dits objets graphiques qui ne sont pas recouvertes.

2. Méthode pour afficher des fenêtres chevauchantes selon la revendication 1, où si les dits graphiques comprennent une ligne, alors ladite phase qui consiste à traiter les dits ordres graphiques pour générer des ordres graphiques modifiés inclut la détection des points sur lesquels ]adite ligne coupe la limite d'une fenêtre et la génération de deux, d'une ou d'aucune ligne représentant les parties de ladite ligne non recouvertes.

3. Méthode pour afficher des fenêtres chevauchantes selon la revendication 1 ou 2, où si les dits graphiques comprennent une zone définie par des lignes de limite, alors ladite phase qui consiste à traiter les dits ordres graphiques pour générer des ordres graphiques modifiés inclut la détection des parties des lignes de limite définissant une zone non recouverte et la génération d'ordres graphiques définissant des lignes de terminaison le long de ladite limite de la fenêtre chevauchante entre les points sur lesquels les dites-lignes de limite entrent dans une fenêtre chevauchante et les points sur lesquels les dits traits de bordure sortent de ladite fenêtre chevauchante.

4. Méthode pour afficher des fenêtres chevauchantes selon l'une quelconque des revendications précédentes, où si les dits graphiques incluent des images graphiques comprenant une matrice de valeurs d'élément d'image, alors ladite phase qui consiste à traiter les dits ordres graphiques pour générer des ordres graphiques modifiés inclut de couper les éléments graphiques qui sont recouverts.

5. Méthode pour afficher des fenêtre chevauchantes selon la revendication 4, où quand les dits graphiques d'image sont affichés avec un arrière plan précis, ladite phase qui consiste à traiter les dits ordres graphiques pour générer des ordres graphiques modifiés inclut la génération d'ordres graphiques définissant une zone d'arrière plan, et le découpage et l'affichage de ladite zone d'arrière plan en tant qu'objet graphique avant de traiter et d'afficher ladite image graphique.

6. Méthode pour afficher des fenêtre chevauchantes selon l'une quelconque des revendications précédentes, où si les dits graphiques incluent des symboles, alors ladite phase qui consiste à traiter les dits ordres graphiques pour générer des ordres graphiques modifiés inclut la détection et le rejet des caractères qui sont entièrement recouverts, la détection et le dessin des caractères qui sont partiellement recouverts, en développant ces caractères partiellement recouverts en lignes ou en zones définies par des traits de bordure ou en images graphiques et en traitant les dits caractères développés comme s'ils étaient des objets graphiques définis par des lignes de limite ou des graphiques d'images ou des lignes.

7. Appareil d'affichage graphique pour afficher une un écran des fenêtres chevauchantes contenant des objets graphiques définis par ordres graphiques, ledit appareil comprenant :
un moyen pour assigner à chaque fenêtre une valeur de priorité, les fenêtres ayant une priorité plus élevée recouvrant les fenêtres qui ont un niveau de priorité plus faible, où les dites fenêtres se chevauchent,
un moyen pour générer une liste des dites fenêtres avec les valeurs de priorité qui leurs sont associées pour déterminer laquelle des dites fenêtres chevauchantes peut recouvrir des objets graphiques affichés dans des fenêtres de priorité plus faible,
une logique de découpage ayant un moyen pour traiter les dits ordres graphiques pour générer des ordres graphiques modifiés définissant les portions des dits objets graphiques qui ne sont pas recouvertes, pour chaque fenêtre chevauchante lue dans ladite liste, et
un moyen pour diriger un dispositif d'affichage graphique au moye des dits ordres graphiques modifiés pour afficher les dites parties des dits objets graphiques qui ne sont pas recouvertes.

8. Appareil d'affichage graphique selon la revendication 7, où ladite logique de découpage comprend un moyen pour traiter les ordres graphiques comprenant des symboles en détectant et en rejetant les caractères qui sont entièrement recouverts, en détectant et en dessinant les caractères qui sont partiellement recouverts, en développant ces caractères partiellement recouverts en lignes ou en zones définies par des lignes de limite ou en images graphiques et en traitant les dits caractères développés comme s'ils étaient des objets graphiques définis par des lignes de limite ou des graphiques d'images ou des lignes.

9. Programme de commande d'un système d'affichage graphique pour un appareil d'affichage graphique servant à afficher des fenêtres chevauchantes contenant des objets graphiques définis par des ordres graphiques, ledit programme de commande du système d'affichage graphique comprenant :
des instructions de programme informatique pour assigner à chaque fenêtre une valeur de priorité, les fenêtres ayant une priorité plus élevée recouvrant les fenêtres qui ont un niveau de priorité plus faible, où les dites fenêtres se chevauchent,
des instructions de programme informatique pour générer une liste des dites fenêtres avec les valeurs de priorité qui leurs sont associées pour déterminer laquelle des dites fenêtres chevauchantes peut recouvrir des objets graphiques affichés dans des fenêtres de priorité plus faible, une logique de découpage ayant un moyen pour traiter les dits ordres graphiques pour générer des ordres graphiques modifiés définissant les portions des dits objets graphiques qui ne sont pas recouvertes, pour chaque fenêtre chevauchante lue dans ladite liste, et
des instructions de programme informatique pour diriger un dispositif d'affichage graphique au moyen des dits ordres graphiques modifiés pour afficher les dites parties des dits objets graphiques qui ne sont pas recouvertes.
